Europäisches Patentamt

European Patent Office

Office européen des brevets

(11) Publication number: **0 228 851 B1**

(12) **EUROPEAN PATENT SPECIFICATION**

(45) Date of publication of patent specification: **09.10.91**   (51) Int. Cl.⁵: **G11B 20/00**, G11B 20/12, H04N 5/92

(21) Application number: **86309734.1**

(22) Date of filing: **12.12.86**

(54) **Sound field expansion systems.**

(30) Priority: **18.12.85 JP 285296/85**

(43) Date of publication of application:
**15.07.87 Bulletin 87/29**

(45) Publication of the grant of the patent:
**09.10.91 Bulletin 91/41**

(84) Designated Contracting States:
**DE FR GB NL**

(56) References cited:
**EP-A- 0 084 969**
**GB-A- 1 563 800**
**GB-A- 2 065 426**
**GB-A- 2 144 942**

**PATENT ABSTRACTS OF JAPAN, vol. 5, no. 113 (E-66)[785], 22nd July 1981; & JP - A - 56 53000 (MATSUSHITA DENKI SANGYO K.K.) 12-05-1981**

(73) Proprietor: **SONY CORPORATION**
**7-35 Kitashinagawa 6-Chome Shinagawa-ku Tokyo 141(JP)**

(72) Inventor: **Mitsuhashi, Takamichi C/o Patents Division**
**Sony Corporation 6-7-35 Kitashinagawa Shinagawa-ku Tokyo 141(JP)**
Inventor: **Tomioka, Masao C/o Patents Division**
**Sony Corporation 6-7-35 Kitashinagawa Shinagawa-ku Tokyo 141(JP)**

(74) Representative: **Pilch, Adam John Michael et al**
**D. YOUNG & CO. 10 Staple Inn London WC1V 7RD(GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to sound field expansion systems, in particular to such systems which are applicable to magnetic recording and reproducing apparatus such as video tape recorders (VTRs).

Previously-proposed magnetic recording and reproducing apparatus (for example helical scan type video tape recorders) have utilised recording tracks which slant across the magnetic tape and record video signals on the tracks by the use of at least one rotary head. The audio signals are recorded by a stationary head, and accordingly audio tracks lie along the elongate axis of the magnetic tape. In such magnetic recording and reproducing apparatus, the rate of feed of the magnetic tape may be reduced to expand the recording time. But when the tape feed rate is reduced, the quality of the audio signals is also reduced. To improve the quality of the sound, a magnetic tape recording and reproducing apparatus has been proposed which records the audio signals in the video tracks by means of one or more rotary heads.

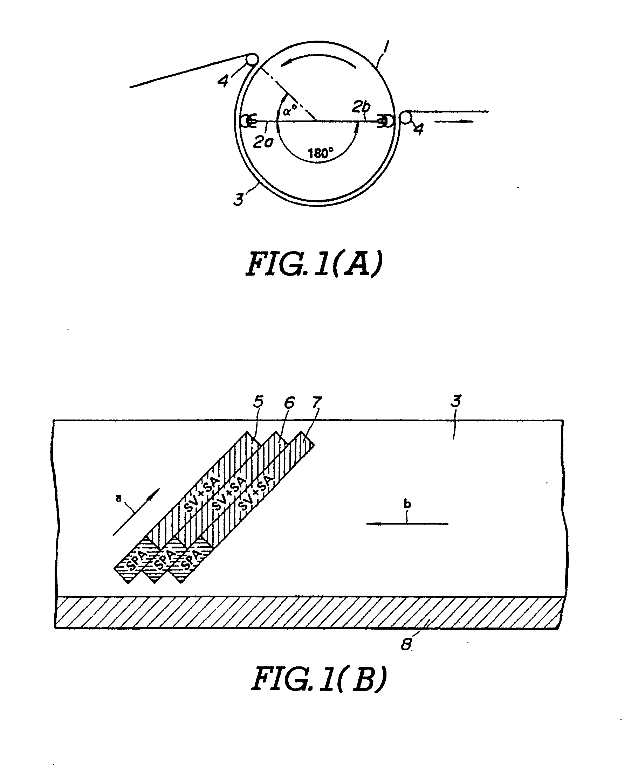

Figure 1(A) of the accompanying drawings shows an arrangement of a rotary drum and magnetic tape in the magnetic recording and reproducing apparatus (hereinafter referred to simply as the "VTR") and Figure 1(B) of the accompanying drawings shows the recording format on the tracks of the magnetic tape.

In Figure 1(A), the VTR includes a rotary drum 1, two rotary heads 2a and 2b, with a magnetic tape 3 wound around a portion of the periphery of the rotary drum 1 by means of guide pins 4 so that the tape 3 contacts the drum 1 over an angle of $180° + \alpha$, wherein $\alpha \doteqdot 30°$ (this angle of the rotary contact portion is sometimes referred to as the "wrap angle").

The audio signals to be recorded are alternately provided from associated recording circuitry to each of the rotary heads 2a,2b. The audio signals from the recording circuitry are then recorded in the form of time-axis-compressed pulse-code-modulated (PCM) audio signals SPA on tracks 5,6,7 obliquely formed on the tape 3 together with one-field video signals SV in respective predetermined regions of the tracks 5,6,7. Furthermore, an audio frequency-modulated (AFM) signal SA (constituted by a 1.5 MHz carrier wave) is recorded on the same tracks 5,6,7 with the video signal SV in a frequency share mode (i.e. frequency division multiplex mode). An auxiliary track 8 is located along a tape running direction on which an (unmodulated) audio signal has usually been recorded by means of a stationary head, as described above. The AFM audio signal is recorded with the audio signal frequency modulated and interposed between frequency bands of a low-band converted chrominance signal and a luminance signal of the video signal. In Figure 1(B), an arrow mark a denotes the scanning direction of the rotary heads 2a,2b and an arrow mark b denotes a running direction of the tape 3. In addition, the above-described PCM audio signal SPA may generally be a stereo signal comprising an L (left) channel signal and an R (right) channel signal, but can more rarely be a monaural signal comprising an (R + L) signal; the AFM audio signal is a monaural signal.

In other words, the recording format shown in Figure 1(B) has common tracks 5,6,7 on each of which a video signal and a time-axis-compressed PCM audio signal are recorded in a time share mode, and on the same track of which an AFM signal is recorded with the video signal in a frequency division multiplex mode.

When the above-described signal SPA is recorded, the signal SPA recorded on each track 5,6,7 does not correspond to the above-described video signal SV recorded on the same track, since the signal SPA is recorded with a delay of substantially one field interval of time. For example, the signal SPA recorded on the track 6 substantially corresponds to the signal SV which has been recorded on the previous track 5.

When the tape 3 is replayed in the above-described format, the signal SPA is further delayed by an interval of time substantially corresponding to one track. Hence during playback, the signal SPA is reproduced with a delay substantially corresponding to two field intervals (about 33.3 msec.) whereas the above-described AFM signal SA is reproduced from the tape 3 at the same time as the output of the corresponding video signal SV.

The above-described recording and reproducing method is disclosed in Japanese Patent Application Laid-Open Publication No. JP-A-58-94288 published on 4 June 1983, and has been exemplified in the so-called 8 mm VTR format.

In the above-described reproducing apparatus having two or more channels, if a stereo audio source has been recorded, an effect of expanding a sound field can be achieved when such audible sound field expansion processing is carried out during the playback operation. However, if a monaural audio source has been recorded, the effect of expanding the sound field cannot sufficiently be achieved and only an extremely weak representation of the sound field can be formed. Hence, a relatively simple reproduced sound field results.

In addition, since previously-proposed sound field expansion systems use delay circuits constituted by BBDs (bucket brigate devices), CCDs (charge coupled devices) or the like, the circuit construction thereof is complex and the cost is high.

Especially in the case where a musical sound featuring one or more human voices is reproduced, the reproduced sound is unnatural and difficult to hear since the echo effect of the human voice is artificially and unnecessarily emphasised.

One such previously-proposed sound field expansion system is disclosed in UK Patent Application Serial No. GB-A-2 065 426. In this system, two adders receive a monaural audio signal and a delayed version thereof, one adder producing a sum signal and the other producing a difference signal. The delayed signal is obtained by passing the audio signal through a delay circuit.

According to the invention there is provided a sound field expansion system comprising:
first and second adders for adding audio and delayed audio signals; characterised in that:
the first adder is arranged to add first and second audio signals which are derived from recording and reproducing apparatus, the second audio signal being delayed by a predetermined interval of time with respect to the first audio signal;
a phase shift circuit is provided for shifting the phase of the first audio signal; and
the second adder is arranged to add the output signal of the phase shift circuit and the second audio signal.

A sound field expansion system embodying the invention, and which is to be described in more detail hereinafter, provides a sufficient effect of sound field expansion for both stereo and monaural audio signals. The system can be embodied in a relatively simple construction, yet is capable of easily expanding the sound field.

The invention will now be described by way of example with reference to the accompanying drawings, throughout which like parts are referred to by like references, and in which:

Figures 1(A) and 1(B) are schematic drawings of a rotary drum and a magnetic tape in a previously-proposed video tape recorder (VTR) and of a tape record format of the previously-proposed VTR which is capable of recording and reproducing a PCM audio signal and an AFM audio signal;
Figure 2 is a simplified circuit block diagram of a sound field expansion system in a first embodiment according to the present invention;
Figure 3 is a characteristic graph of a filter 70 shown in Figure 2;
Figures 4(A) and 4(B) are characteristic graphs of a comb filter formed by circuitry shown in Figure 2;
Figure 5 is a simplified circuit block diagram of a sound field expansion system in a second embodiment according to the present invention; and
Figure 6 is a simplified circuit block diagram of a sound field expansion system in a third embodiment according to the present invention.

The construction and tape format of the previously-proposed magnetic recording and reproducing video tape recorder (VTR) apparatus has been described with reference to Figures 1(A) and 1(B).

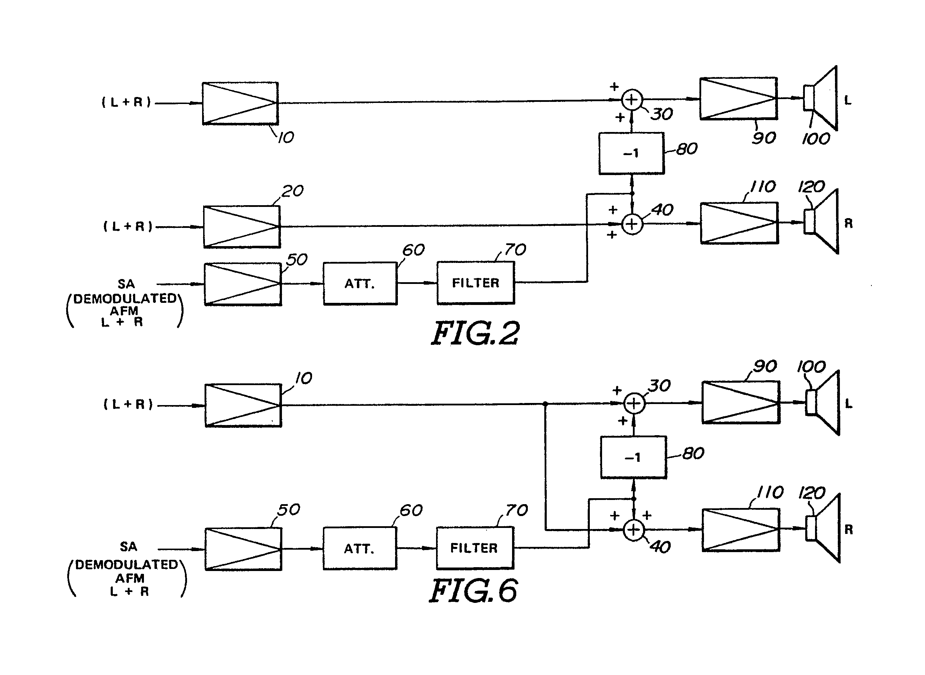

Figure 2 shows a first embodiment of the present invention. In Figure 2, amplifiers 10 and 20 receive audio signals derived from demodulation of time-axis-compressed pulse-code-modulated (PCM) audio signals SPA reproduced by, for example, a VTR. The playback circuitry of such a VTR is disclosed in EP-A-2029380 and reference is directed thereto for further details of the playback circuitry.

In the first embodiment shown in Figure 2, the signal SPA is monaural, and hence the same signal (L + R) is sent to both amplifiers 10,20. It should be noted that, as an alternative, the right R or left L stereo channel signals may instead be fed to the respective amplifiers 10,20, namely the R signal may be fed to the lower amplifier 20 and the L signal may be fed to the upper amplifier 10. The amplified output signals of the amplifiers 10,20 are respectively fed to adders 30,40.

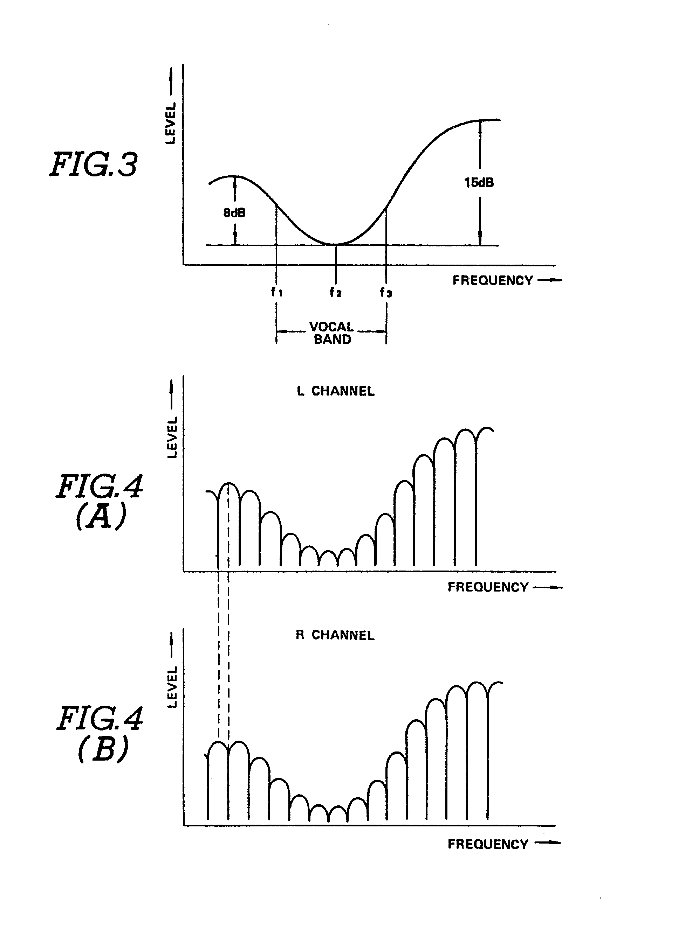

An amplifier 50 receives an audio signal SA derived from the demodulation of a reproduced audio frequency modulated (AFM) signal. It should be noted that the above-described (L + R) signal is delayed by about 33.3 milliseconds (msec.) with respect to the signal SA. The output signal level of the amplifier 50 is adjusted by means of an attenuator 60 and supplied to a filter 70. The filter 70 has a frequency characteristic such that the output level thereof is reduced within a frequency band of the human voice, ranging from the frequency $f_1$ to the frequency $f_3$ as shown in Figure 3. In Figure 3, for example, the frequency $f_1$ may denote 500 Hz, the frequency $f_2$ may denote 1 kHz, and the frequency $f_3$ may denote 2 kHz.

The output signal phase of the filter 70 is then shifted by a predetermined quantity by means of a phase shift circuit; in this embodiment, the phase is inverted by means of an inverting amplifier 80 and thereafter added to the amplified output signal (L + R) of the amplifier 10 by means of the adder 30, to provide an addition output signal. The addition output signal is sent to an L-channel speaker 100 via a power amplifier 90. Also, the output signal of the filter 70 is sent directly to the adder 40 in which it is added to the amplified output signal (L + R) of the amplifier 20. The addition output signal of the adder 40 is sent to an R-channel speaker 120 via a power amplifier 110.

When the signal SA is added to the signal (L + R), which is delayed by about 33.3 msec. with respect to the signal SA, the two adders 30,40 effectively constitute two virtual comb filters having characteristics as shown in Figures 4(A) and 4(B) respectively. Since, in this case, the phase inverted signal SA (which has been inverted by the inverting amplifier 80) is added to the signal (L + R) on the L-channel side, the comb filter characteristic of the L-channel side has peaks and cusps which are inverted with respect to those of the R-channel side, as shown in Figures 4(A) and 4(B). In addition, the output signal levels of these virtual comb filters are reduced (in other words, significant comb filter output characteristics do not appear) within the vocal frequency band $f_1$ to $f_3$, due to the influence of the filter characteristic of the filter 70, as shown in Figure 3.

In the circuit shown in Figure 2 and having the characteristics shown in Figures 4(A) and 4(B), an acoustic image is formed by means of the left and right (L-channel and R-channel) speakers 100 and 120. The acoustic image is moved from right to left positions and vice versa as perceived by a listener according to the frequencies of the input signals (L + R) and SA in a frequency band up to the frequency $f_1$ from a lower frequency. In addition, the acoustic image is approximately positioned in the centre of the sound field with respect to the two speakers 100,120, within the frequency band $f_1$ to $f_3$. Furthermore, the acoustic image is again moved from the left to the right positions and vice versa when the frequencies of the input signals (L + R) and SA are higher than the frequency $f_3$.

Accordingly, an infinite number of acoustic images are scattered over a wide space surrounding or in the vicinity of the left and right speakers 100,120 according to the frequency difference and phase difference between the L and R channels. Such an effect permits an apparently very wide and deep sound field to be provided from the two speakers 100,120 even though the sound source is monaural. In addition, an acoustic image of a sound such as a human's singing voice is substantially oriented in the centre of the sound field.

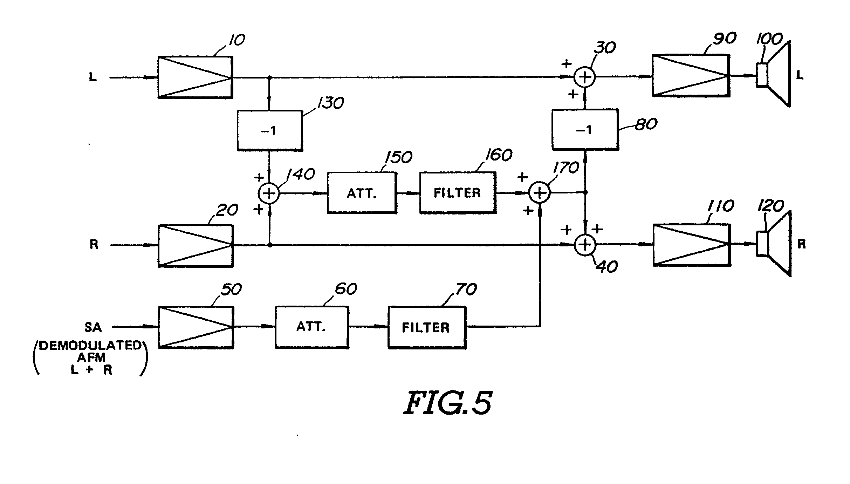

Figure 5 shows a second embodiment in which the amplifiers 10,20 receive left and right channel stereo signals L,R demodulated from the above-described signal SPA.

An adder 140 adds a signal derived from phase inversion of the left output signal from the amplifier 10 by an inverting amplifier 130 to the right output signal from the amplifier 20 to provide an addition signal. After suitable correction of the addition signal has been carried out by means of an attuenuator 150 and a filter 160, the corrected addition signal is further added to the output signal of the filter 70 (similar to that of Figure 1) in an adder 170. The addition output signal derived from the adder 170 is then supplied to the adder 30 and also, via the inverting amplifier 80, to the adder 40.

The adder 140 provides a signal according to a level difference between the signals L and R, since the inverting amplifier 130 is interposed between the amplifier 10 and adder 140. Hence, since the two comb filter characteristics are provided at the two adders 30,40 due to the addition of the signal according to the level differences between the signals L and R derived through the filter 160 to the output signal of the filter 70, an effect can be achieved such that frequency components of the level difference signal (provided according to the level difference between the R and L signals) are significantly emphasised. This effect causes greater emphasis of the orientation of the acoustic field such that the acoustic images are oriented more to the left when they appear in positions to the left and, in turn, oriented more to the right when they appear in positions to the right. Thus the acoustic field is widened.

Figure 6 shows a third embodiment in which the amplifier 20 shown in Figures 1 and 2 has been omitted, and the output signal of the amplifier 10 is sent directly to the adder 40, as well as to the adder 30. The amplifier 10 receives a monaural input signal (L + R). This embodiment achieves a pseudo-stereo effect by expanding the sound field.

It should be noted that, in each of the embodiments shown in Figure 2, Figure 5 or Figure 6, any one of the signals (L + R), R or L may arbitrarily be supplied to either or both of the amplifiers 10,20, if provided. In addition, a phase shift circuit capable of adjusting the magnitude of the phase shift applied to the input signals (L + R), R or L may alternatively be used in place of each or either of the inverting amplifiers 80,130. The filter 70 may be installed at each output side of either or both of the amplifiers 10,20. Furthermore, an acoustic image of a particular frequency can be positioned by selecting various characteristics of the filters 70,160. It should be noted that the AFM signal may be recorded on the tracks 5,6,7 as described with reference to Figure 1(B). Alternatively, the signal may be recorded on the auxiliary track 8 running in the lateral direction of the tape 3, as shown in Figure 1(B). In the manner described above, a variety of effects can be produced to expand the sound field.

Since the sound field expansion systems applicable to VTRs as described above can utilise effectively the time delay of the signal SPA, the expansion of the sound field can easily be put into practice without any change to the previously-proposed tape format of the VTR or to the specifications of the magnetic recording and reproducing apparatus, or even without the need to use delay circuit elements such as BBDs (bucket brigade devices), CCDs (charge coupled devices) and the like. In addition, since an acoustic image can be formed over a wider space than in the previously-proposed system, a wide and deep sound field space can be achieved, even if the sound source is monaural. Furthermore, if the characteristic of the or each of the filter(s) 70,160 is suitably selected, an effect can be achieved such that the acoustic image of a desired frequency band is positioned as required, for example substantially at the centre.

## Claims

1. A sound field expansion system comprising: first and second adders (40,30) for adding audio and delayed audio signals (SA,SPA); characterised in that: the first adder (40) is arranged to add first (SA) and second (SPA) audio signals which are derived from recording and reproducing apparatus, the second audio signal (SPA) being delayed by a predetermined interval of time with respect to the first audio signal (SA); a phase shift circuit (80) is provided for shifting the phase of the first audio signal (SA); and the second adder (30) is arranged to add the output signal of the phase shift circuit (80) and the second audio signal (SPA).

2. A system according to claim 1, wherein the second audio signal (SPA) is derived from a pulse-code-modulated time-axis-compressed audio signal recorded on a common track (5,6,7) of a magnetic tape (3) with a one-field video signal (SV) in a time share mode, and the first audio signal (SA) is derived from demodulation of an audio frequency-modulated signal recorded on said common track (5,6,7) with the one-field video signal (SV) in a frequency division multiplex mode.

3. A system according to claim 1 or claim 2, comprising a correction circuit (60,70) for providing a predetermined frequency characteristic for the first audio signal (SA) before the first audio signal (SA) is sent to the first adder (40) and to the phase shift circuit (80).

4. A system according to claim 3, wherein the correction circuit comprises a filter (70) having a predetermined frequency characteristic such that the output signal level thereof is reduced within a frequency band of the human voice.

5. A system according to claim 3 or claim 4, wherein both first (SA) and second (SPA) audio signals are monaural.

6. A system according to claim 5, comprising a speaker circuit (100,120) for producing a sound field on the basis of both output signals of the first and second adders (40,30), wherein the speaker circuit includes an L-channel speaker (100) and an R-channel speaker (120), and wherein the first adder (40) receives one monaural second audio signal (SPA) and the monaural first audio signal (SA) and sends its output signal to the R-channel speaker (120), and the second adder (30) receives another monaural second audio signal (SPA) and the monaural first audio signal (SA) passed through the phase shift circuit (80) and sends its output signal to the L-channel speaker (100).

7. A system according to claim 3 or claim 4, wherein the first audio signal (SA) is monaural and wherein the second audio signal (SPA) is stereophonic and comprises an L-channel second audio signal (L) and a R-channel second audio signal (R).

8. A system according to claim 7, comprising a speaker circuit (100,120) for producing a sound field on the basis of both output signals of the first and second adders (40,30) and which includes an L-channel speaker (100) and an R-channel speaker (120), another phase shift circuit (130) which shifts the phase of the L-channel second audio signal (L), a third adder (140) for adding the L-channel second audio signal (L) passed through the other phase shift circuit (130) and the R-channel second audio signal (R), another correction circuit (150,160) for providing another predetermined frequency characteristic for the output signal from the third adder (140), and a fourth adder (170) for adding the output signal of the other correction circuit (150,160) and the output signal of the first-mentioned correction circuit (60,70), wherein the first adder (40) receives the output signal from the fourth adder (170) and the R-channel second audio signal (R) and sends its output signal to the R-channel speaker (120), and wherein the second adder (30) receives the L-channel second audio signal (L) and the output signal of the first-mentioned phase shift circuit (80) and sends its output signal to the L-channel speaker (100).

9. A system according to claim 8, wherein the two phase shift circuits are both inverting amplifiers (80,130).

10. A system according to claim 8 or claim 9, wherein the two correction circuits (60,70 and 150,160) both have predetermined frequency characteristics.

11. A system according to claim 10, wherein the predetermined characteristics of the two correction circuits (60,70 and 150,160) are such that the output signal levels thereof are reduced at selected frequency bands.

12. A system according to claim 8, wherein the magnitude of the phase shift provided by each of the two phase shift circuits (80,130) is adjustable.

**Revendications**

1. Un système d'expansion de champ sonore comprenant :
des premier et second additionneurs (40, 30) qui sont destinés à additionner un signal audio et un signal audio retardé (SA, SPA);
caractérisé en ce que :
le premier additionneur (40) est connecté de façon à additionner des premier (SA) et second (SPA) signaux audio qui sont obtenus à partir d'un appareil d'enregistrement et de reproduction, le second signal audio (SPA) étant retardé d'un intervalle de temps prédéterminé par rapport au premier signal audio (SA); un circuit déphaseur (80) qui est incorporé dans le but de déphaser le premier signal audio (SA); et le second additionneur (30) est connecté de façon à additionner le signal de sortie du circuit déphaseur (80) et le second signal audio (SPA).

2. Un système selon la revendication 1, dans lequel le second signal audio (SPA) est obtenu à partir d'un signal audio en modulation par impulsions et codage, avec compression de l'axe des temps, qui est enregistré sur une piste commune (5, 6, 7) d'une bande magnétique (3), avec un signal vidéo d'une trame (SV), dans un mode de temps partagé, et le premier signal audio (SA) est obtenu par démodulation d'un signal audio modulé en fréquence qui est enregistré sur la piste commune (5, 6, 7) avec le signal vidéo d'une trame (SV), dans un mode de multiplexage en fréquence.

3. Un système selon la revendication 1 ou la revendication 2, comprenant un circuit de correction (60, 70) qui est destiné à procurer une caractéristique de fréquence prédéterminée pour le premier signal audio (SA), avant que ce premier signal audio (SA) ne soit émis vers le premier additionneur (40) et vers le circuit déphaseur (80).

4. Un système selon la revendication 3, dans lequel le circuit de correction comprend un filtre (70) ayant une caractéristique de fréquence prédéterminée telle que son niveau de signal de sortie soit réduit à l'intérieur d'une bande de fréquence de la voix humaine.

5. Un système selon la revendication 3 ou la revendication 4, dans lequel les premier (SA) et second (SPA) signaux audio sont monophoniques.

6. Un système selon la revendication 5, comprenant un circuit de haut-parleurs (100, 120) qui est destiné à produire un champ sonore sur la base des deux signaux de sortie des premier et second additionneurs (40, 30), dans lequel le circuit de haut-parleurs comprend un haut-parleur de la voie gauche (100) et un haut-parleur de la voie droite (120), et dans lequel le premier additionneur (40) reçoit un second signal audio monophonique (SPA) et le premier signal audio monophonique (SA), et il émet son signal de sortie vers le haut-parleur de la voie droite (120), et le second additionneur (30) reçoit un autre second signal audio monophonique (SPA) et le premier signal audio monophonique (SA) qui a traversé le circuit déphaseur (80), et il émet son signal de sortie vers le haut-parleur de la voie gauche (100).

7. Un système selon la revendication 3 ou la revendication 4, dans lequel le premier signal audio (SA) est monophonique et dans lequel le second signal audio (SPA) est stéréophonique, et il comprend un second signal audio de la voie gauche (L) et un second signal audio de la voie droite (R).

8. Un système selon la revendication 7, comprenant un circuit de haut-parleurs (100, 120) qui est destiné à produire un champ sonore sur la base des deux signaux de sortie des premier et second additionneurs (40, 30), ce circuit comprenant un haut-parleur de la voie gauche (100) et un haut-parleur de la voie droite (120), un autre circuit déphaseur (130) qui déphase le second signal audio de la voie gauche (L), un troisième additionneur (140) qui est destiné à additionner le second signal audio de la voie gauche (L) qui a traversé l'autre circuit déphaseur (130) et le second signal audio de la voie droite (R), un autre circuit de correction (150, 160) qui est destiné à procurer une autre caractéristique de fréquence prédéterminée pour le signal de sortie du troisième additionneur (140), et un quatrième additionneur (170) qui est destiné à additionner le signal de sortie de l'autre circuit de correction (150, 160) et le signal de sortie du circuit de correction mentionné en premier (60, 70), dans lequel le premier additionneur (40) reçoit le signal de sortie du quatrième additionneur (170) et le second signal audio de la voie droite (R), et il émet son signal de sortie vers le haut-parleur de la voie droite (120), et dans lequel le second additionneur (30) reçoit le second signal audio de la voie gauche (L) et le signal de sortie du circuit déphaseur mentionné en premier (80), et il émet son signal de sortie vers le haut-parleur de la voie gauche (100).

9. Un système selon la revendication 8, dans lequel les deux circuits déphaseurs sont des amplificateurs inverseurs (80, 130).

10. Un système selon la revendication 8 ou la revendication 9, dans lequel les deux circuits de correction (60, 70 et 150, 160) ont des caractéristiques de fréquence prédéterminées.

11. Un système selon la revendication 10, dans lequel les caractéristiques prédéterminées des deux circuits de correction (60, 70 et 150, 160) sont telles que leurs niveaux de signal de sortie sont réduits dans des bandes de fréquence sélectionnées.

12. Un système selon la revendication 8, dans lequel la valeur du déphasage que produit chacun des deux circuits déphaseurs (80, 130) est réglable.

## Patentansprüche

1. Schallfeldexpansionssystem mit einem ersten und zweiten Addierer (40, 30) zum Addieren von Audio- und verzögerten Audiosignalen (SA, SPA),
dadurch gekennzeichnet, daß
der erste Addierer (40) zum Addieren eines von einem Aufzeichnungs- und Wiedergabegerät abgeleiteten ersten und zweiten Audiosignal (SA, SPA) ausgebildet ist, wobei das zweite Audiosignal (SPA) um ein vorbestimmtes Zeitintervall in Bezug auf das erste Audiosignal (SA) verzögert ist,
ein Phasenschieberschaltkreis (80) zum Verschieben der Phase des ersten Audiosignals (SA) vorgesehen ist, und der zweite Addierer (30) zum Addieren des Ausgangssignals des Phasenschieberschaltkreises (80) und des zweiten Audiosignals (SPA) ausgebildet ist.

2. System nach Anspruch 1, wobei das zweite Audiosignal (SPA) von einem in einem zeitlich verzahnten Modus mit einem Einfeld-Videosignal (SV) auf einer gemeinsamen Spur (5, 6, 7) auf einem Magnetband (3) aufgezeichneten pulscodemodulierten, zeitachsenkomprimierten Audiosignal und das erste Audiosignal (SA) von einer Demodulation eines in einem Frequenzmultiplexmodus mit dem Einfeld-Videosignal (SV) auf der gemeinsamen Spur (5, 6, 7) aufgezeichneten frequenzmodulierten Audiosignal abgeleitet ist.

3. System nach Anspruch 1 oder 2, mit einem Korrekturschaltkreis (60, 70) zum Bereitstellen einer vorbestimmten Frequenzcharakteristik für das erste Audiosignal (SA) vor dem Senden des ersten Audiosignals (SA) zum ersten Addierer (40) und zum Phasenschieberschaltkreis (80).

4. System nach Anspruch 3, wobei der Korrekturschaltkreis ein Filter (70) mit einer vorbestimmten Frequenzcharakteristik derart aufweist, daß dessen Ausgangssignalpegel innerhalb eines Frequenzbandes der menschlichen Stimme reduziert ist.

5. System nach Anspruch 3 oder 4, wobei sowohl das erste (SA) als auch das zweite Audiosignal (SPA) monaural ist.

6. System nach Anspruch 5, mit einem Lautsprecherschaltkreis (100, 120) zum Erzeugen eines Schallfeldes auf der Basis beider Ausgangssignale des ersten und zweiten Addierers (40, 30), wobei der Lautsprecherschaltkreis einen L-kanaligen Lautsprecher (100) und einen R-kanaligen Lautsprecher (120) aufweist, wobei der erste Addierer (40) ein monaurales zweites Audiosignal (SPA) und das monaurale erste Audiosignal (SA) empfängt und sein Ausgangssignal an den R-kanaligen Lautsprecher (120) sendet und der zweite Addierer (30) ein anderes monaurales zweites Audiosignal (SPA) und das durch den Phasenschieberschaltkreis (80) hindurchgegangene monaurale erste Audiosignal (SA) empfängt und sein Ausgangssignal an den L-kanaligen Lautsprecher (100) sendet.

7. System nach Anspruch 3 oder Anspruch 4, wobei das erste Audiosignal (SA) monaural ist und wobei das zweite Audiosignal (SPA) stereophon ist und ein L-kanaliges zweites Audiosignal (L) und ein R-kanaliges zweites Audiosignal (R) aufweist.

8. System nach Anspruch 7, mit einem einen L-kanaligen Lautsprecher (100) und einen R-kanaligen Lautsprecher (120) aufweisenden Lautsprecherschaltkreis (100, 120) zum Erzeugen eines Schallfeldes auf der Basis beider Ausgangssignale des ersten und zweiten Addierers (40, 30), mit einem anderen Phasenschieberschaltkreis (130), welcher die Phase des L-kanaligen zweiten Audiosignals (L) verschiebt, einem dritten Addierer (140) zum Addieren des durch den anderen Phasenschieberschaltkreis (130) hindurchgegangenen L-kanaligen zweiten Audiosignals (L) und des R-kanaligen zweiten Audiosignals (R), einem anderen Korrekturschaltkreis (150, 160) zum Bereitstellen einer anderen vorbestimmten Frequenzcharakteristik für das Ausgangssignal aus dem dritten Addierer (140), und einem vierten Addierer (170) zum Addieren des Ausgangssignals des anderen Korrekturschaltkreises (150, 160) und des Ausgangssignals aus dem erstgenannten Korrekturschaltkreis (60, 70), wobei der erste Addierer (40) das Ausgangssignal aus dem vierten Addierer (170) und das R-kanalige zweite Audiosignal (R) empfängt und sein Ausgangssignal an den R-kanaligen Lautsprecher (120) sendet, und wobei der zweite Addierer (30) das L-kanalige zweite Audiosignal (L) und das Ausgangssignal aus dem erstgenannten Phasenschieberschaltkreis (80) empfängt und sein Ausgangssignal an den L-kanaligen Lautsprecher (100) sendet.

9. System nach Anspruch 8, wobei beide Phasenschieberschaltkreise invertierende Verstärker (80, 130) sind.

10. System nach Anspruch 8 oder 9, wobei beide Korrekturschaltkreise (60, 70 und 150, 160) vorbestimmte Frequenzcharakteristiken aufweisen.

11. System nach Anspruch 10, wobei die vorbestimmten Charakteristiken der zwei Korrekturschaltkreise (60, 70 und 150, 160) derart sind, daß deren Ausgangssignalpegel bei ausgewählten Frequenzbändern reduziert sind.

12. System nach Anspruch 8, wobei die Größe der durch die zwei Phasenschieberschaltkreise (80, 130) gelieferte Phasenverschiebung einstellbar ist.

FIG. 1(A)

FIG. 1( B)

FIG.2

FIG.6

EP 0 228 851 B1

FIG.3

LEVEL

15dB

8dB

f₁      f₂      f₃      FREQUENCY

VOCAL
BAND

FIG.4
(A)

L CHANNEL

LEVEL

FREQUENCY

FIG.4
(B)

R CHANNEL

LEVEL

FREQUENCY

11

FIG.5